(19) Europäisches Patentamt
European Patent Office
Office européen des brevets

(11) **EP 2 381 735 A1**

(12) **EUROPEAN PATENT APPLICATION**
published in accordance with Art. 153(4) EPC

(43) Date of publication:
**26.10.2011 Bulletin 2011/43**

(21) Application number: **09835997.9**

(22) Date of filing: **21.10.2009**

(51) Int Cl.:
***H04W 80/00*** *(2009.01)*

(86) International application number:
**PCT/CN2009/074551**

(87) International publication number:
**WO 2010/075710 (08.07.2010 Gazette 2010/27)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.12.2008 CN 200810192979**

(71) Applicant: **ZTE Corporation
Shenzhen, Guangdong 518057 (CN)**

(72) Inventors:
• **ZHANG, Yuqiang
Shenzhen
Guangdong 518057 (CN)**
• **DAI, Bo
Shenzhen
Guangdong 518057 (CN)**
• **HAO, Peng
Shenzhen
Guangdong 518057 (CN)**
• **LIANG, Chunli
Shenzhen
Guangdong 518057 (CN)**
• **YU, Bin
Shenzhen
Guangdong 518057 (CN)**
• **MA, Zhifeng
Shenzhen
Guangdong 518057 (CN)**

(74) Representative: **Bokinge, Ole
Awapatent AB
Junkersgatan 1
582 35 Linköping (SE)**

(54) **METHOD FOR PHYSICAL UPLINK CONTROL CHANNEL OF LARGE BANDWIDTH SYSTEM**

(57)     The present invention provides a method for a Physical Uplink Control Channel in a broad bandwidth system, in which an index number of an uplink component carrier where a PUCCH resource for transmitting a HARQ-ACK in uplink corresponding to a dynamically scheduled PDSCH is located is obtained by mapping of an index number of a downlink component carrier where a PDCCH scheduling this PDSCH is located, or is a fixed value, or is notified by higher layer signaling or physical layer signaling; and under semi-static scheduling, it is obtained by mapping of the index number of the downlink component carrier where the PDSCH is located, or is notified by the higher layer signaling; thereby implementing indication of the PUCCH in the broad bandwidth system. The method provided in the present invention can ensure the compatibility of the LTE-Advanced system with the LTE Release-8 system, benefits the increase of the system capacity and the scheduling flexibility of the LTE-Advanced system, and makes the LTE-Advanced terminal obtain the maximum frequency selective gain.

FIG. 2

**Description**

Technical Field

The present invention relates to the mobile radio communication field, and particularly, to a method for a physical uplink control channel in a broad bandwidth radio communication system.

Background of the Invention

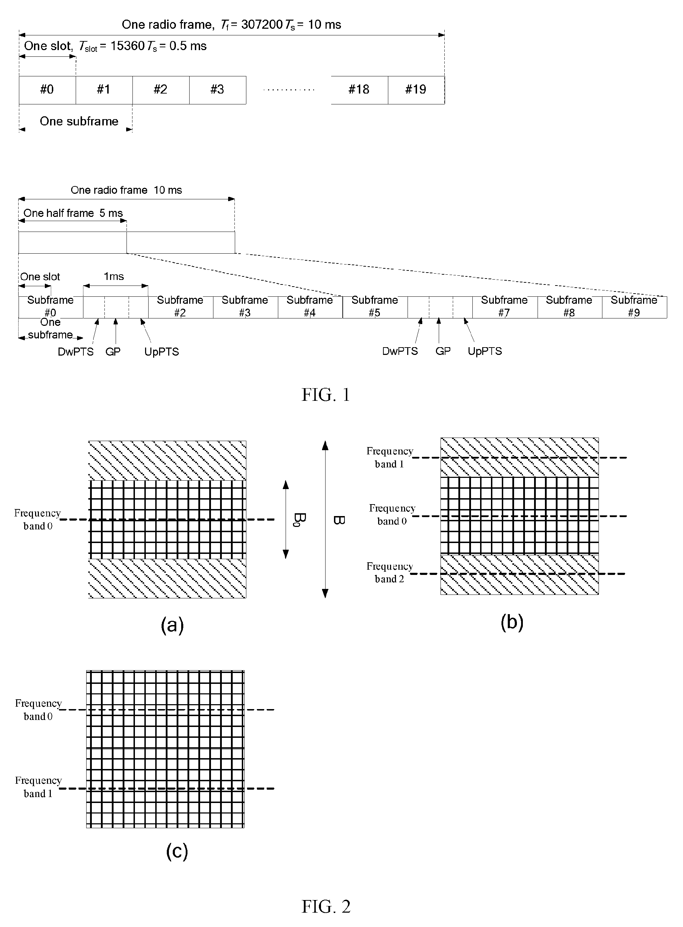

FIG. 1 shows the frame structures of the Frequency Division Duplex (FDD) mode and the Time Division Duplex (TDD) mode in a Long Term Evolution (LTE) system. In the frame structure of the FDD mode, one 10ms radio frame consists of twenty slots of 0.5ms length numbered as 0~19, and slots 2i and 2i+1 constitute the subframe i of 1ms length. In the frame structure of the TDD mode, one 10ms radio frame consists of two half frames of 5ms length, and one half fame includes 5 subframes of 1ms length. The subframe i is defined as two slots, 2i and 2i+1, of 0.5ms length. In the two frame structures, as for the Normal Cyclic Prefix (Normal CP), one slot includes 7 symbols of 66.7 $\mu$s length, wherein the length of the CP of the first symbol is 5.21 $\mu$s, and the length of the CP of the other 6 symbols is 4.69 $\mu$s; as for the Extended CP, one slot includes 6 symbols, and the length of the CP of all the symbols is 16.67 $\mu$s.

The LTE defines that the Physical Downlink Control Channel (PDCCH) carries the scheduling allocation and other control information; the Physical Control Format Indicator Channel (PCFICH) is carried in a subframe to transmit information of the numbers of the Orthogonal Frequency Division Multiplexing (OFDM) symbols of the PDCCH, and is sent on the first OFDM symbol of the subframe, and its frequency location is determined by the system downlink bandwidth and the cell ID. Each PDCCH consists of a number of Control Channel Elements (CCE), and the number of the CCEs in each subframe is determined by the number of PDCCHs and the downlink bandwidth. The CCEs in each subframe is indexed by being numbered according to the sequence of the frequency domain first and then the time domain.

The LTE Release-8 defines 6 types of bandwidths: 1.4MHz, 3MHz, 5MHz, 10MHz, 15MHz and 20MHz.

The LTE-Advanced (Further Advancements for the E-UTRA) is an evolved version of the LTE Release-8. Besides satisfying or exceeding all the 3GPP TR 25.913: "Requirements for Evolved UTRA (E-UTRA) and Evolved UTRAN (E-UTRAN)" related requirements, the LTE-Advanced should also satisfy or exceed the requirements of the IMT-Advanced put forward by the ITU-Radio communications sector (ITU-R). The LTE-Advanced is required to satisfy the requirement of being compatible backwards with the LTE Release-8, and this requirement is: the terminal of the LTE Release-8 can operate in the network of the LTE-Advanced; and the terminal of the LTE-Advanced can operate in the network of the LTE Release-8.

In addition, the LTE-Advanced should be able to operate under different sizes of spectrum configuration, including the spectrum configuration broader than that in the LTE Release-8 (e.g., 100MHz continuous spectrum resources),to achieve a higher performance and target peak rate. Since the LTE-Advanced network is required to be able to be accessed by the LTE users, its operating frequency band should cover the current LTE frequency band. There is no allocable 100MHz continuous spectrum bandwidth in this frequency band, so a direct technique should be addressed by the LTE-Advanced is to aggregate several continuous component carriers (spectrums) distributed in different frequency bands to form a 100MHz bandwidth that can be used by the LTE-Advanced. That is, the aggregated spectrum is divided into n component carriers (spectrums), and the spectrum in each component carrier (spectrum) is continuous.

There are mainly 3 spectrum configuration schemes, as shown in FIG. 2, in which the grid part is the system bandwidth compatible with the LTE Release-8, and the oblique line part is the LTE-Advanced dedicated system bandwidth. FIG. 2a is the spectrum configuration scheme 1, in which the LTE-Advanced spectrum configuration is comprised of one system bandwidth defined in the LTE-Advanced, and this bandwidth is greater than the system bandwidth defined in the LTE Release-8. FIG. 2b is the spectrum configuration scheme 2, in which the LTE-Advanced spectrum configuration is comprised by the carrier aggregation of one system bandwidth defined in the LTE Release-8 and a plurality of system bandwidths defined in the LTE-Advanced. FIG. 2c is the spectrum configuration scheme 3, in which the LTE-Advanced spectrum configuration is comprised by the carrier aggregation of a plurality of system bandwidths defined in the LTE Release-8, wherein the above-mentioned carrier aggregation may be aggregation of continuous carriers or aggregation of discontinuous carriers. The LTE Release-8 terminal can access the frequency band compatible with the LTE Release-8, and the LTE-Advanced terminal not only can access the frequency band compatible with the LTE Release-8, but also can access the frequency band of the LTE-Advanced.

In consideration of the compatibility with the LTE Release-8, each component carrier of the LTE-Advanced should be able to be accessed by LTE users, which requires ensuring that the channel structure of each component carrier should try to keep consistent with the LTE.

At present, the LTE-Advanced is likely to be in the FDD duplex mode, and the numbers of the uplink and downlink available component carriers are different, as such, each downlink component carrier cannot correspond to the uplink control channel Physical Uplink Control Channel (PUCCH) one to one. The LTE designed PUCCH resource index is unable to operate correctly.

In the current LTE FDD duplex mode, the index of the PUCCH resource for transmitting the Hybrid Automatic Repeat Request Acknowledgement (HARQ-ACK) in uplink designed for the dynamically scheduled Physical Downlink Shared Channel (PDSCH) is implicitly mapped by the minimal CCE of the PDCCH allocated to the user in the scheduled downlink subframe. Namely, $n_{\text{PUCCH}}^{(1)} = n_{\text{CCE}} + N_{\text{PUCCH}}^{(1)}$, wherein the $n_{\text{PUCCH}}^{(1)}$ is index of the PUCCH resource on which the user transmits the HARQ-ACK, the $n_{\text{CCE}}$ is the corresponding index of the first CCE for transmitting the PDCCH, and the $N_{\text{PUCCH}}^{(1)}$ is configured by a higher layer. For the semi-static scheduled PDSCH, the $n_{\text{PUCCH}}^{(1)}$ is configured by the higher layer.

For the dynamically scheduled PDSCH in the LTE TDD duplex mode, the index of the PUCCH resource for transmitting HARQ-ACK in uplink is obtained after the block interleaving on the CCE of the PDCCH allocated to the user in the scheduled downlink subframe. Since under the TDD mode, there may exist a configuration that the number of downlink subframes is greater than that of uplink subframes in one radio frame, there may exist the possibility that the feedback information of a plurality of downlink subframes is sent in the same uplink subframe. Hence the concept of feedback window is defined. The feedback window refers to all the downlink subframes corresponding to the uplink subframe (herein "corresponding" means all of these downlink subframes feed back acknowledgement information in this uplink subframe).

A method of block interleaving PUCCH resource mapping is used in LTE TDD, and in the method, the approach for calculating the PUCCH resource index is as follows: firstly the terminal selects one value *p* from {0, 1, 2, 3}, such that the condition of $N_p \leq n_{\text{CCE}} < N_{p+1}$ is met, wherein the $n_{\text{CCE}}$ is the index of the first CCE where the PDCCH of the last downlink subframe scheduled to the terminal in the feedback window is located;

$$N_p = \max\left\{0, \left\lfloor [N_{\text{RB}}^{\text{DL}} \times (N_{\text{sc}}^{\text{RB}} \times p - 4)]/36 \right\rfloor\right\},$$ that is, the number of occupied CCEs when this feedback window includes the PDCCH and the number of the symbols in the PDCCH is *p*, the $N_{\text{RB}}^{\text{DL}}$ is the number of downlink Resource Blocks (RB) in the system bandwidth, and the $N_{\text{sc}}^{\text{RB}}$ is the number of frequency carriers occupied by each RB;

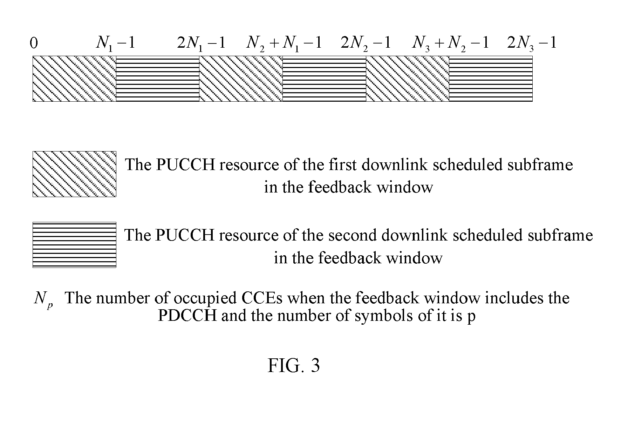

$$n_{\text{PUCCH}}^{(1)} = (M - m - 1) \times N_p + m \times N_{p+1} + n_{\text{CCE}} + N_{\text{PUCCH}}^{(1)},$$ wherein the *M* is the number of subframes corresponding to the feedback window, the *m* is the index of the location of the last subframe scheduled to the terminal by the base station in the feedback window in all the subframes in the feedback window, and the $N_{\text{PUCCH}}^{(1)}$ is notified by higher layer signaling, and denotes the number of PUCCH resources reserved for the semi-static allocation. The schematic diagram of the mapping relationship is shown in FIG. 3.

Since the LTE-Advanced introduces the carrier aggregation, there exists the problem of how to index the HARQ-ACKs corresponding to the service channels transmitted by PDSCHs of a plurality of downlink component carriers in one or more uplink component carriers. Since the LTE-Advanced system may support the situation that the numbers of the uplink and downlink (the FDD duplex mode) component carriers are not equal, it may introduce the mechanism that a plurality of downlink component carriers correspond to one uplink component carrier to carry out the feedback. As such, a method for mapping the PUCCH resources which keeps the compatibility with the LTE Release-8 needs to be designed.

Summary of the Invention

The technical problem to be solved in the present invention is to provide a method for indicating a PUCCH that is suitable for the LTE-Advanced, which can ensure the compatibility of the LTE-Advanced system with the LTE Release-8 system, and make the LTE-Advanced terminal obtain the maximal frequency selective gain.

In order to solve the above problem, the present invention presents a method for a Physical Uplink Control Channel in a broad bandwidth system, and the method comprises:

an index number of an uplink component carrier where a Physical Uplink Control Channel (PUCCH) resource for transmitting a Hybrid Automatic Repeat Request Acknowledgement (HARQ-ACK) in uplink corresponding to a dynamically scheduled Physical Downlink Shared Channel (PDSCH) is located being obtained by mapping of an index number of a downlink component carrier where a Physical Downlink Control Channel (PDCCH) scheduling this PDSCH is located, or being a fixed value, or being obtained by notification from higher layer signaling or physical layer signaling,

thereby implementing indication of the PUCCH in the broad bandwidth system.

Furthermore, in the above method, the step of said index number of the uplink component carrier being obtained by mapping of said index number of the downlink component carrier is:

said index number of the uplink component carrier being the same as said index number of the downlink component carrier, or said index number of the uplink component carrier being obtained by said index number of the downlink component carrier plus an offset.

Furthermore, in the above method, said offset is obtained by notification from the higher layer signaling or physical layer signaling.

Furthermore, the above method further comprises:

an index of the PUCCH resource for transmitting the HARQ-ACK in uplink corresponding to said PSDCH in said uplink component carrier being obtained by mapping of an index of a first or a last Control Channel Element (CCE) of the PDCCH scheduling the PDSCH, or being obtained by mapping of the index of the first or the last CCE of the PDCCH scheduling the PDSCH plus an offset value.

Furthermore, in the above method,

in the mapping step for obtaining the index of the PUCCH resource for transmitting the HARQ-ACK in uplink corresponding to said PSDCH in said uplink component carrier, the index is determined by the following formula:

$$n_{\mathrm{PUCCH},i,j}^{(1)} = n_{\mathrm{CCE},j} + N_{\mathrm{PUCCH},i}^{(1)} \text{ or } n_{\mathrm{PUCCH},i,j}^{(1)} = n_{\mathrm{CCE},j} + N_{\mathrm{PUCCH},i}^{(1)} + offset \text{ , wherein the } n_{\mathrm{PUCCH},i,j}^{(1)} \text{ is the in-}$$

dex of said PUCCH resource in said uplink component carrier, $n_{\mathrm{CCE},j}$ is the index of the first or the last CCE of the PDCCH scheduling the PDSCH, the $N_{\mathrm{PUCCH},i}^{(1)}$ is configured by the higher layer, and the *offset* is said offset value.

Furthermore, the above method further comprises:

an index of the PUCCH resource for transmitting the HARQ-ACK in uplink corresponding to said PSDCH in said uplink component carrier being obtained by block interleaving mapping.

Furthermore, in the above method, the step of said block interleaving mapping comprises:

if a $j^{\mathrm{th}}$ downlink component carrier has a scheduled subframe that needs to feed back, and the PUCCH resource of said downlink component carrier is located in a $i^{\mathrm{th}}$ uplink component carrier, an approach for calculating the index of the PUCCH resource of said downlink component carrier in said uplink component carrier being as follows:

firstly a terminal selecting one value $p_j$ from {0, 1, 2, 3}, such that a condition of $N_{p_j,j} \leq n_{\mathrm{CCE},j} < N_{p_j+1,j}$ is met, wherein the $n_{\mathrm{CCE},j}$ is the index of the first CCE where the PDCCH of the last downlink subframe scheduled to the terminal in the $j^{\mathrm{th}}$ downlink component carrier feedback window is located;

$$N_{p_j} = \max\left\{0, \left\lfloor [N_{\mathrm{RB},j}^{\mathrm{DL}} \times (N_{\mathrm{sc}}^{\mathrm{RB}} \times p_j - 4)]/36 \right\rfloor\right\} \text{ , namely the number of occupied CCEs when the } j^{\mathrm{th}} \text{ downlink}$$

component carrier in the feedback window includes the PDCCH and the number of symbols of said $j^{\mathrm{th}}$ downlink component carrier is $p_j$, $N_{p_j+1,j}$ being the number of occupied CCEs when the $j^{\mathrm{th}}$ downlink component carrier in the feedback window includes the PDCCH and the number of symbols of said $j^{\mathrm{th}}$ downlink component carrier is $p_j$ +1, the $N_{\mathrm{RB},j}^{\mathrm{DL}}$ being the number of resource blocks of the $j^{\mathrm{th}}$ downlink component carrier, and the $N_{\mathrm{sc}}^{\mathrm{RB}}$

being the number of frequency carriers occupied by each resource block; then the index of the PUCCH resource in the uplink component carrier

$$n_{\text{PUCCH},i}^{(1)} = (M_j - m_j - 1) \times N_{p_j} + m_j \times N_{p_j+1} + n_{\text{CCE}_j} + N_{\text{PUCCH},i}^{(1)} \qquad , \quad \text{or}$$

$$n_{\text{PUCCH},i}^{(1)} = (M_j - m_j - 1) \times N_{p_j} + m_j \times N_{p_j+1} + n_{\text{CCE}_j} + N_{\text{PUCCH},i}^{(1)} + \textit{offset} \,, \quad \text{wherein the } M_j \text{ is the number}$$

of subframes corresponding to the $j^{\text{th}}$ downlink component carrier feedback window, the $m_j$ is an index of a location of the last subframe scheduled to the terminal by a base station in the $j^{\text{th}}$ downlink component carrier feedback window in all the subframes in the feedback window, and the *offset* is an offset value.

Furthermore, in the above method, said offset value is notified by the higher layer signaling or physical layer signaling, or said offset value is *offset* = $d \times N_{\text{PUCCH}}$, wherein the $N_{\text{PUCCH}}$ is a fixed value, and the *d* is a logical sequence number of the downlink component carrier where the PDCCH scheduling the PDSCH is located in *k* downlink component carriers corresponding to said uplink component carrier.

Furthermore, in the above method, the step of said block interleaving mapping comprises:

cascading all the CCEs on the downlink component carrier where the PDCCH scheduling said PDSCH is located according to a sequence of frequency domain first and then time domain,

evenly dividing the cascaded CCEs into a plurality of segments according to the maximum number of symbols of the PDCCH in this downlink component carrier, wherein the length of the last segment is no greater than the length of each previous segment,

obtaining the index of the PUCCH resource for transmitting the HARQ-ACK in uplink corresponding to said PDSCH in said uplink component carrier by mapping of the segmented CCEs plus an offset notified by the higher layer or physical layer signaling.

The present invention further presents a method for a Physical Uplink Control Channel in a broad bandwidth system, and the method comprises:

an index number of an uplink component carrier where a Physical Uplink Control Channel (PUCCH) resource for transmitting a Hybrid Automatic Repeat Request Acknowledgement (HARQ-ACK) corresponding to a semi-static scheduled Physical Downlink Shared Channel (PDSCH) is located being obtained by mapping of an index number of a downlink component carrier where this PDSCH is located, or being obtained by notification from higher layer signaling,

thereby implementing indication of the PUCCH in the broad bandwidth system.

Furthermore, in the above method, the step of said index number of the uplink component carrier being obtained by mapping of said index number of the downlink component carrier is:

said index number of the uplink component carrier being the same as said index number of the downlink component carrier, or said index number of the uplink component carrier being obtained by said index number of the downlink component carrier plus an offset.

Furthermore, in the above method, said offset is notified by the higher layer signaling.
Furthermore, the above method further comprises:

an index of the PUCCH resource for transmitting the HARQ-ACK in uplink corresponding to said PDSCH in said uplink component carrier being obtained by notification from the higher layer signaling.

The method for indicating a Physical Uplink Control Channel in a broad bandwidth system presented in the present invention can ensure the compatibility of the LTE-Advanced system with the LTE Release-8 system, benefits the increase of the system capacity and the scheduling flexibility of the LTE-Advanced system, and makes the LTE-Advanced terminal obtain the maximal frequency selective gain.

Brief Description of the Drawings

FIG. 1 is schematic diagrams of the frame structures of the FDD/TDD modes in a LTE system;

FIG. 2 is schematic diagrams of 3 spectrum configuration schemes in a LTE-Advanced system; and

FIG. 3 is a schematic diagram of mapping CCE indexes to PUCCH resource indexes when block interleaving is adopted in the TDD mode in a LTE system.

Preferred Embodiments of the Present Invention

Implementation of the present invention will be described in detail below in conjunction with embodiments, and thereby the implementation process of how the present invention applies technical means to solve technical problems and achieves technical effects can be sufficiently understood and carried out.
The essential idea of the present invention is:

for a LTE-Advanced user, and for the dynamically scheduled PDSCH, the index of the PUCCH resource for transmitting the HARQ-ACK in uplink is jointly mapped by the index number of the downlink component carrier where the PDCCH scheduling this PDSCH is located and the index number of the last CCE or the first CCE of this PDCCH, wherein

the index number of the uplink component carrier where this PUCCH resource is located can be the same as that of the downlink component carrier where the PDCCH scheduling this PDSCH is located, or be obtained by the index number of the downlink component carrier where the PDCCH scheduling this PDSCH is located plus an offset notified by higher layer signaling or physical layer signaling; or be directly notified by the higher layer signaling or physical layer signaling; or be a fixed value.

The index number of the PUCCH resource in the uplink component carrier is obtained by the mapping of the index number of the last or the first CCE of the PDCCH scheduling the PDSCH, or obtained by the mapping of the index number of the last or the first CCE of the PDCCH scheduling the PDSCH plus an offset notified by the higher layer or physical layer, or obtained by block interleaving mapping. A particular block interleaving mapping method is described in subsequent embodiments.
For a LTE-Advanced user, and for the semi-static scheduled PDSCH, the index of the corresponding PUCCH resource for transmitting the HARQ-ACK in uplink is mapped by the following way:

the index number of the uplink component carrier where the PUCCH resource is located is mapped by the index number of the downlink component carrier where the PDSCH is located plus an offset notified by a higher layer, or is equal to the index number of this downlink component carrier, or is notified by the higher layer signaling, or is a fixed value. The index of the PUCCH resource in this uplink component carrier is notified by the higher layer signaling.

Since the LTE-Advanced is required to be compatible with the LTE user, the LTE-Advanced aggregated carriers include LTE frequency bands, then the LTE user can access the LTE-Advanced network in the uplink and downlink frequency bands that have been designed for use by LTE. At this time, the mapping method of the uplink control channel of the LTE user who has accessed the LTE-Advanced network is completely the same as the design of the LTE.
The present invention will further be described in detail below with reference to particular embodiments.
It is assumed that the number of downlink component carriers corresponding to one uplink component carrier is $k$, the number of carrier aggregated component carriers in uplink is $I$, $I$ is any natural number, and the number of carrier aggregated component carriers in downlink is $J$, $J$ is any natural number.

Embodiment 1

The LTE-Advanced operates in the FDD duplex mode and TDD duplex mode,

and for the LTE-Advanced user, the index of the PUCCH resource for transmitting the HARQ-ACK in uplink corresponding to the dynamically scheduled PDSCH is implicitly mapped by the index of the first or the last CCE of the PDCCH allocated to this user in the scheduled downlink subframe in combination with the index of the downlink component carrier where the PDCCH scheduling this PDSCH is located.

The mapping method could be: $n_{\mathrm{PUCCH},i,j}^{(1)} = n_{\mathrm{CCE},j} + N_{\mathrm{PUCCH},i}^{(1)}$, wherein $i = j \leq I$, or $i = X$, or $i = (j + X)\mathrm{mod}I$.

The $n_{\mathrm{PUCCH},i,j}^{(1)}$ is the index of the PUCCH resource in the $i$th uplink component carrier corresponding to the dynamically scheduled PDCCH in the $j$th downlink component carrier, as well as the index of the PUCCH resource in this component carrier, corresponding to this user; the $n_{\mathrm{CCE},j}$ is the index of the first or the last CCE used for transmitting the PDCCH in the dynamically scheduled $j$th downlink component carrier corresponding to the user; the $N_{\mathrm{PUCCH},i}^{(1)}$ is configured by the higher layer, and denotes the number of PUCCH resources reserved in the $i$th uplink component carrier, and the $X$ is notified by signaling (from the higher layer or physical layer), or the $X$ is a fixed value. That is, the index number of the uplink component carrier where the index of the PUCCH resource for transmitting the HARQ-ACK in uplink corresponding to the PDSCH dynamically scheduled by the user is located is the same as the index number of the downlink component carrier where the PDCCH scheduling the PDSCH is located, or is notified by the higher layer signaling or the physical layer signaling, or is obtained by the index number of the downlink component carrier where the PDCCH scheduling the PDSCH is located plus a value $X$ notified by higher layer signaling or physical layer signaling and then modulo the number of uplink component carriers (i.e., obtained by the index number of the downlink component carrier where the PDCCH scheduling the PDSCH is located plus an offset value notified by higher layer signaling or physical layer signaling), or is a fixed value; the index of the PUCCH resource in the uplink component carrier is the index of the first or the last CCE of the PDCCH scheduling the PDSCH plus a value $N_{\mathrm{PUCCH},i}^{(1)}$ configured by the higher layer.

Embodiment 2

When $k>1$, namely when one uplink component carrier corresponds to a plurality of downlink component carriers, the LTE-Advanced operates in the FDD duplex mode and TDD duplex mode, and for the LTE-Advanced user, the index of the uplink component carrier where the PUCCH resource for transmitting the HARQ-ACK in uplink corresponding to the dynamically scheduled PDSCH in a certain downlink component carrier is located is determined by the index of the downlink component carrier where this PDSCH is located, and the index of the PUCCH resource in this uplink component carrier is mapped by the index of the first or the last CCE of the PDCCH corresponding to this PDSCH in the scheduled downlink subframe.

The mapping method is: $n_{\mathrm{PUCCH},i,j}^{(1)} = n_{\mathrm{CCE},j} + N_{\mathrm{PUCCH},i}^{(1)} + offset$, wherein $i = (j + X)\mathrm{mod}I$, or $i = X$. The $n_{\mathrm{PUCCH},i,j}^{(1)}$ is the index of the PUCCH resource in the $i$th uplink component carrier corresponding to the dynamically scheduled PDCCH in the $j$th downlink component carrier, as well as the index of the PUCCH resource in this component carrier, corresponding to the user; the $n_{\mathrm{CCE},j}$ is the index of the first or the last CCE used for transmitting the PDCCH in the dynamically scheduled $j$th downlink component carrier corresponding to the user; the $N_{\mathrm{PUCCH},i}^{(1)}$ is configured by the higher layer, and denotes the number of PUCCH resources reserved in the $i$th uplink component carrier, the $X$ is notified by the higher layer signaling, or the $X$ is a fixed value, and the *offset* can be notified by the higher layer signaling or physical layer signaling, or *offset* = $d \times N_{\mathrm{PUCCH}}$, where the $N_{\mathrm{PUCCH}}$ is a fixed value, and $d$ is the logical sequence number of said downlink component carrier in the $k$ downlink component carriers corresponding to the uplink component carrier $j$, namely, $d$ is the logical sequence number of the downlink component carrier where the PDCCH scheduling the PDSCH is located in the $k$ downlink component carriers corresponding to this uplink component carrier. When $k=1$, the mapping method of $n_{\mathrm{PUCCH},i,j}^{(1)} = n_{\mathrm{CCE},j} + N_{\mathrm{PUCCH},i}^{(1)} + offset$ can also be adopted.

Embodiment 3

The LTE-Advanced operates in the TDD duplex mode, and for the LTE-Advanced user, the mapping method is:

the index of the uplink component carrier where the PUCCH resource for transmitting the HARQ-ACK in uplink corresponding to the dynamically scheduled PDSCH in a certain downlink component carrier is located is obtained by the mapping of the index of the downlink component carrier where the PDCCH scheduling this PDSCH is located, and the index of the PUCCH resource in the uplink component carrier is obtained by block interleaving mapping.

If the $j$th downlink component carrier has a scheduled subframe which needs to feed back, and its PUCCH resource is located in the $i$th uplink component carrier ($i=j$, or $i=X$, or $i = (j + X)\text{mod}I$), the approach for calculating the index of the PUCCH resource is as follows: firstly the terminal selects one value $p_j$ from {0, 1, 2, 3} such that the condition of $N_{pj,j} \leq n_{\text{CCE},j} < N_{pj+1,j}$ is met, wherein the $n_{\text{CCE},j}$ is the index of the first CCE where the PDCCH of the last downlink subframe scheduled to the terminal in the $j$th downlink component carrier feedback window is located;

$$N_{p_j} = \max\left\{0, \left\lfloor [N_{\text{RB},j}^{\text{DL}} \times (N_{\text{sc}}^{\text{RB}} \times p_j - 4)] / 36 \right\rfloor\right\},$$ namely the number of the occupied CCEs when the $j$th downlink component carrier in the feedback window includes the PDCCH and the number of symbols of it is $p_j$, the $N_{pj+1,j}$ is the number of occupied CCEs when the $j$th downlink component carrier in the feedback window includes the PDCCH and the number of symbols of it is $p_j$ +1, the $N_{\text{RB},j}^{\text{DL}}$ is the number of the Resource Blocks (RB) of the $j$th downlink component carrier, and the $N_{\text{sc}}^{\text{RB}}$ is the number of frequency carriers occupied by each RB; then

$$n_{\text{PUCCH},i}^{(1)} = (M_j - m_j - 1) \times N_{p_j} + m_j \times N_{p_j+1} + n_{\text{CCE},j} + N_{\text{PUCCH},i}^{(1)},$$ wherein the $M_j$ is the number of subframes corresponding to the feedback window in the $j$th downlink component carrier, the $m_j$ is the index of the location of the last subframe scheduled to the terminal by the base station in the feedback window in the $j$th downlink component carrier in all the subframes in the feedback window, and the $X$ is notified by the higher layer or physical layer signaling, or the $X$ is a fixed value. That is, the index of the uplink component carrier where the PUCCH resource for transmitting the HARQ-ACK in uplink corresponding to the dynamically scheduled PDSCH is located is the same as the index of the downlink carrier component where the PDCCH scheduling the PDSCH is located, or is notified by the higher layer signaling or physical layer signaling, or is obtained by the index of the downlink component carrier where the PDCCH scheduling the PDSCH is located plus a value $X$ notified by higher layer signaling or physical layer signaling and then modulo the number of uplink component carriers (i.e., obtained by the index of the downlink component carrier where the PDCCH scheduling the PDSCH is located plus an offset value notified by higher layer or physical layer signaling), or is a fixed value. And the index of the PUCCH resource in the uplink component carrier is obtained by block interleaving mapping.

Embodiment 4

When $k>1$, namely, when one uplink component carrier corresponds to a plurality of downlink component carriers, the LTE-Advanced operates in the TDD duplex mode, and one uplink subframe correspondingly feeds back control information of a plurality of downlink subframes.
The number of carrier aggregated component carriers in uplink is $I$, and $I$ is any natural number. The number of carrier aggregated component carriers in downlink is $J$, $J$ is any natural number, and $I<J$.
For the LTE-Advanced user, the mapping method is:

the index of the uplink component carrier where the PUCCH resource for transmitting the HARQ-ACK in uplink corresponding to the dynamically scheduled PDSCH in a certain downlink component carrier is located is determined by the index of the downlink component carrier where the PDCCH scheduling the PDSCH is located, and the index of the PUCCH resource in the uplink component carrier is obtained by block interleaving mapping.

If the $j$th downlink component carrier has a scheduled subframe which needs to feed back, and its PUCCH resource is located in the $i$th uplink component carrier ($i = (j + X)\text{mod}I$ or $i=X$), the approach for calculating the index of the PUCCH resource is as follows: firstly the terminal selects one value $p_j$ from {0, 1, 2 , 3} such that the condition of $N_{pj,j} \leq n_{\text{CCE},j} < N_{pj+1,j}$ is met, wherein the $n_{\text{CCE},j}$ is the index of the first CCE where the PDCCH of the last downlink subframe scheduled to the terminal in the $j$th downlink component carrier feedback window is located;

$$N_{p,j} = \max\left\{0, \left\lfloor [N_{\text{RB},j}^{\text{DL}} \times (N_{\text{sc}}^{\text{RB}} \times p_{,j} - 4)] / 36 \right\rfloor\right\},$$ namely the number of occupied CCEs when the $j$th downlink component carrier in the feedback window includes the PDCCH and the number of symbols of it is $p$, the $N_{\mathrm{RB},j}^{\mathrm{DL}}$ is the number of Resource Blocks (RB) of the $j^{\mathrm{th}}$ downlink component carrier, and the $N_{\mathrm{sc}}^{\mathrm{RB}}$ is the number of frequency carriers included in each RB; then $n_{\mathrm{PUCCH},i}^{(1)} = (M_j - m_j - 1) \times N_{p_j} + m_j \times N_{p_j+1} + n_{\mathrm{CCE},j} + N_{\mathrm{PUCCH},i}^{(1)} + \mathit{offset}$, wherein the

$M_j$ is the number of subframes corresponding to the feedback window in the $j^{\mathrm{th}}$ downlink component carrier, the $m_j$ is the index of the location of the last subframe scheduled to the terminal by the base station in the feedback window in the $j^{\mathrm{th}}$ downlink component carrier in all the subframes in the feedback window, the $X$ is notified by the higher layer signaling, or the $X$ is a fixed value, and the $\mathit{offset}$ can be notified by the higher layer signaling, or $\mathit{offset} = d \times N_{\mathrm{PUCCH}}$, where the $N_{\mathrm{PUCCH}}$ is a fixed value, and $d$ is the logical sequence number of said downlink component carrier in the $k$ downlink component carriers corresponding to the uplink component carrier $j$, namely, $d$ is the logical sequence number of the downlink component carrier where the PDCCH scheduling the PDSCH is located in the $k$ downlink component carriers corresponding to the uplink component carrier.

Embodiment 5

When $k>1$, namely, when one uplink component carrier corresponds to a plurality of downlink component carriers, the LTE-Advanced operates in the TDD duplex mode, and one uplink subframe correspondingly feeds back control information of a plurality of downlink subframes.

The number of carrier aggregated component carriers in uplink is $I$, and $I$ is any natural number. The number of carrier aggregated component carriers in downlink is $J$, $J$ is any natural number, and $I<J$.

For the LTE-Advanced user, the mapping method is:

the index of the uplink component carrier where the PUCCH resource for transmitting the HARQ-ACK in uplink corresponding to the dynamically scheduled PDSCH in the downlink component carrier is located is determined by the index of the downlink component carrier where the PDCCH scheduling this PDSCH is located plus an offset notified by higher layer or physical layer signaling, or is directly notified by the higher layer or physical layer signaling, and the index of the PUCCH resource in the uplink component carrier is obtained by block interleaving mapping.

The flow of the block interleaving is as follows: cascading all the CCEs according to the sequence of frequency domain first and then the time domain in the downlink component carrier where the PDCCH is located, and then evenly dividing the cascaded CCEs into a number of segments according to the maximal number of symbols of the PDCCH in this downlink component carrier, the length of the last segment being no greater than the length of each previous segment, namely a plurality CCEs would be mapped to the same PUCCH resource, and finally obtaining the index of the PUCCH resource for transmitting the HARQ-ACK in uplink corresponding to the PDSCH in the uplink component carrier by the mapping of the segmented CCEs plus an offset notified by higher layer or physical layer signaling.

Embodiment 6

For the LTE-Advanced user, and for the semi-static scheduled PDSCH, the index of the uplink component carrier where the corresponding PUCCH resource for transmitting the HARQ-ACK in uplink is located is obtained by the mapping of the index of the downlink component carrier where this PDSCH is located plus an offset notified by higher layer signaling. And the index of the PUCCH resource for transmitting the HARQ-ACK in the uplink component carrier is notified by the higher layer signaling.

Embodiment 7

For the LTE-Advanced user, and for the semi-static scheduled PDSCH, the index of the uplink component carrier where the corresponding PUCCH resource for transmitting the HARQ-ACK in uplink is located is notified by the higher layer signaling. And the index of the corresponding PUCCH resource for transmitting the HARQ-ACK in this uplink component carrier is notified by the higher layer signaling.

Embodiment 8

For the LTE-Advanced user, and for the semi-static scheduled PDSCH, the index of the uplink component carrier where the corresponding PUCCH resource for transmitting the HARQ-ACK in uplink is located is obtained by the mapping of the index of the downlink component carrier where this PDSCH is located ($i=j$, or $i=X$, or $i = (j + X)\bmod l$). And the index of the corresponding PUCCH resource for transmitting the HARQ-ACK in the uplink component carrier is notified by the higher layer signaling, and the $X$ is notified by the higher layer signaling, or the $X$ is a fixed value. That is, the index of the uplink component carrier where the PUCCH resource for transmitting the HARQ-ACK in uplink corresponding to the semi-static scheduled PDSCH is located is the same as the index of the downlink component carrier where this PDSCH is located, or is a fixed value, or is obtained by the mapping of the index of the downlink component carrier where this PDSCH is located plus an offset notified by higher layer signaling.

The method for mapping an uplink control channel in a broad bandwidth system presented in the present invention can ensure the compatibility of the LTE-Advanced system with the LTE Release-8 system, benefits the increase of the system capacity and the scheduling flexibility of the LTE-Advanced system, and makes the LTE-Advanced terminal obtain the maximal frequency selective gain.

What is described above is just preferred embodiments of the present invention, and is not intended to limit the present invention. For a person having ordinary skills in the art, the present invention may have various modifications and variations, for example, the system applying the present invention is not limited to the LTE-Advanced system. Without departing from the spirit and essence of the present invention, all the modifications, equivalent substitutions and improvements etc. shall fall into the scope of the claims of the present invention.

Industrial Applicability

The method for indicating a physical uplink control channel in a broad bandwidth system presented in the present invention can ensure the compatibility of the LTE-Advanced system with the LTE Release-8 system, benefits the increase of the system capacity and the scheduling flexibility of the LTE-Advanced system, and makes the LTE-Advanced terminal obtain the maximum frequency selective gain.

**Claims**

1. A method for a Physical Uplink Control Channel in a broad bandwidth system, comprising:

   an index number of an uplink component carrier where a Physical Uplink Control Channel (PUCCH) resource for transmitting a Hybrid Automatic Repeat Request Acknowledgement (HARQ-ACK) in uplink corresponding to a dynamically scheduled Physical Downlink Shared Channel (PDSCH) is located being obtained by mapping of an index number of a downlink component carrier where a Physical Downlink Control Channel (PDCCH) scheduling this PDSCH is located, or being a fixed value, or being obtained by notification from higher layer signaling or physical layer signaling,
   thereby implementing indication of the PUCCH in the broad bandwidth system.

2. The method as claimed in claim 1, wherein the step of said index number of the uplink component carrier being obtained by mapping of said index number of the downlink component carrier is:

   said index number of the uplink component carrier being the same as said index number of the downlink component carrier, or said index number of the uplink component carrier being obtained by said index number of the downlink component carrier plus an offset.

3. The method as claimed in claim 2, wherein said offset is obtained by notification from the higher layer signaling or physical layer signaling.

4. The method as claimed in claim 1, further comprising:

   an index of the PUCCH resource for transmitting the HARQ-ACK in uplink corresponding to said PSDCH in said uplink component carrier being obtained by mapping of an index of a first or a last Control Channel Element (CCE) of the PDCCH scheduling the PDSCH, or being obtained by mapping of the index of the first or the last CCE of the PDCCH scheduling the PDSCH plus an offset value.

5. The method as claimed in claim 4, wherein
in the mapping step for obtaining the index of the PUCCH resource for transmitting the HARQ-ACK in uplink corresponding to said PSDCH in said uplink component carrier, the index is determined by the following formula:

$$n^{(1)}_{\text{PUCCH},i,j} = n_{\text{CCE},j} + N^{(1)}_{\text{PUCCH},i} \text{ or } n^{(1)}_{\text{PUCCH},i,j} = n_{\text{CCE},j} + N^{(1)}_{\text{PUCCH},i} + \mathit{offset}, \text{ wherein the } n^{(1)}_{\text{PUCCH},i,j} \text{ is the}$$

index of said PUCCH resource in said uplink component carrier, $n_{\text{CCE},j}$ is the index of the first or the last CCE of the PDCCH scheduling the PDSCH, the $N^{(1)}_{\text{PUCCH},i}$ is configured by the higher layer, and the *offset* is said offset value.

6. The method as claimed in claim 1, further comprising:

an index of the PUCCH resource for transmitting the HARQ-ACK in uplink corresponding to said PSDCH in said uplink component carrier being obtained by block interleaving mapping.

7. The method as claimed in claim 6, wherein the step of said block interleaving mapping comprises:

if a $j^{\text{th}}$ downlink component carrier has a scheduled subframe that needs to feed back, and the PUCCH resource of said downlink component carrier is located in a $i^{\text{th}}$ uplink component carrier,
an approach for calculating the index of the PUCCH resource of said downlink component carrier in said uplink component carrier being as follows:

firstly a terminal selecting one value $p_j$ from {0, 1, 2, 3}, such that a condition of $N_{p_j,j} \leq n_{\text{CCE},j} < N_{p_j+1,j}$ is met, wherein the $n_{\text{CCE},j}$ is the index of the first CCE where the PDCCH of the last downlink subframe scheduled to the terminal in the $j^{\text{th}}$ downlink component carrier feedback window is located;

$$N_{p_j} = \max\left\{0, \left\lfloor [N^{\text{DL}}_{\text{RB},j} \times (N^{\text{RB}}_{\text{sc}} \times p_j - 4)]/36 \right\rfloor\right\}, \text{ namely the number of occupied CCEs when the } j^{\text{th}} \text{ down-}$$

link component carrier in the feedback window includes the PDCCH and the number of symbols of said $j^{\text{th}}$ downlink component carrier is $p_j$, $N_{p_j+1,j}$ being the number of occupied CCEs when the $j^{\text{th}}$ downlink component carrier in the feedback window includes the PDCCH and the number of symbols of said $j^{\text{th}}$ downlink

component carrier is $p_j$ + 1, the $N^{\text{DL}}_{\text{RB},j}$ being the number of resource blocks of the $j^{\text{th}}$ downlink component

carrier, and the $N^{\text{RB}}_{\text{sc}}$ being the number of frequency carriers occupied by each resource block; then the index of the PUCCH resource in the uplink component carrier

$$n^{(1)}_{\text{PUCCH},i} = (M_j - m_j - 1) \times N_{p_j} + m_j \times N_{p_j+1} + n_{\text{CCE},j} + N^{(1)}_{\text{PUCCH},i} \qquad , \quad \text{or}$$

$$n^{(1)}_{\text{PUCCH},i} = (M_j - m_j - 1) \times N_{p_j} + m_j \times N_{p_j+1} + n_{\text{CCE},j} + N^{(1)}_{\text{PUCCH},i} + \mathit{offset}, \quad \text{wherein the } M_j \text{ is the}$$

number of subframes corresponding to the $j^{\text{th}}$ downlink component carrier feedback window, the $m_j$ is an index of a location of the last subframe scheduled to the terminal by a base station in the $j^{\text{th}}$ downlink component carrier feedback window in all the subframes in the feedback window, and the *offset* is an offset value.

8. The method as claimed in claim 4, 5, or 7, wherein
said offset value is notified by the higher layer signaling or physical layer signaling, or said offset value is *offset* = $d \times N_{\text{PUCCH}}$, wherein the $N_{\text{PUCCH}}$ is a fixed value, and the $d$ is a logical sequence number of the downlink component carrier where the PDCCH scheduling the PDSCH is located in $k$ downlink component carriers corresponding to said uplink component carrier.

9. The method as claimed in claim 6, wherein the step of said block interleaving mapping comprises:

cascading all the CCEs on the downlink component carrier where the PDCCH scheduling said PDSCH is located according to a sequence of frequency domain first and then time domain,

evenly dividing the cascaded CCEs into a plurality of segments according to the maximum number of symbols of the PDCCH in this downlink component carrier, wherein the length of the last segment is no greater than the length of each previous segment,

obtaining the index of the PUCCH resource for transmitting the HARQ-ACK in uplink corresponding to said PDSCH in said uplink component carrier by mapping of the segmented CCEs plus an offset notified by the higher layer or physical layer signaling.

10. A method for a Physical Uplink Control Channel in a broad bandwidth system, comprising:

an index number of an uplink component carrier where a Physical Uplink Control Channel (PUCCH) resource for transmitting a Hybrid Automatic Repeat Request Acknowledgement (HARQ-ACK) corresponding to a semi-static scheduled Physical Downlink Shared Channel (PDSCH) is located being obtained by mapping of an index number of a downlink component carrier where this PDSCH is located, or being obtained by notification from higher layer signaling,

thereby implementing indication of the PUCCH in the broad bandwidth system.

11. The method as claimed in claim 10, wherein the step of said index number of the uplink component carrier being obtained by mapping of said index number of the downlink component carrier is:

said index number of the uplink component carrier being the same as said index number of the downlink component carrier, or said index number of the uplink component carrier being obtained by said index number of the downlink component carrier plus an offset.

12. The method as claimed in claim 11, wherein said offset is notified by the higher layer signaling.

13. The method as claimed in any one of claims 10 to 12, further comprising:

an index of the PUCCH resource for transmitting the HARQ-ACK in uplink corresponding to said PDSCH in said uplink component carrier being obtained by notification from the higher layer signaling.

One radio frame, $T_f = 307200\,T_s = 10$ ms

One slot, $T_{slot} = 15360\,T_s = 0.5$ ms

| #0 | #1 | #2 | #3 | ………… | #18 | #19 |

One subframe

One radio frame  10 ms

One half frame  5 ms

One slot

1ms

| Subframe #0 | | Subframe #2 | Subframe #3 | Subframe #4 | Subframe #5 | | Subframe #7 | Subframe #8 | Subframe #9 |

One subframe

DwPTS  GP  UpPTS

DwPTS  GP  UpPTS

FIG. 1

Frequency band 0

$B_0$

B

(a)

Frequency band 1

Frequency band 0

Frequency band 2

(b)

Frequency band 0

Frequency band 1

(c)

FIG. 2

$0 \qquad N_1 - 1 \qquad 2N_1 - 1 \quad N_2 + N_1 - 1 \quad 2N_2 - 1 \quad N_3 + N_2 - 1 \quad 2N_3 - 1$

The PUCCH resource of the first downlink scheduled subframe
in the feedback window

The PUCCH resource of the second downlink scheduled subframe
in the feedback window

$N_p$ The number of occupied CCEs when the feedback window includes the
PDCCH and the number of symbols of it is p

FIG. 3

# INTERNATIONAL SEARCH REPORT

| | International application No. |
|---|---|
| | PCT/CN2009/074551 |

**A. CLASSIFICATION OF SUBJECT MATTER**

H04W 80/00 (2009.01) i

According to International Patent Classification (IPC) or to both national classification and IPC

**B. FIELDS SEARCHED**

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

WPI,EPODOC,CNPAT,3GPP: PUCCH，PDCCH，PDSCH，ACK，CCE，component，carrier，frequency，index，indicate，aggregate，offset，map，large bandwidth

**C. DOCUMENTS CONSIDERED TO BE RELEVANT**

| Category* | Citation of document, with indication, where appropriate, of the relevant passages | Relevant to claim No. |
|---|---|---|
| PX | CN101442818A ( ZTE CORPORATION) 27 May 2009 (27.05.2009) the whole document | 1-13 |
| A | 3GPP TSG RAN，Evolved Universal Terrestrial Radio Access (E-UTRA);Physical layer procedures(Release 8)，3GPP TS 36.213 V8.4.0，30 Sep. 2008，Section 10.1 | 1-13 |
| A | CN101252783A (ZTE CORPORATION) 27 Aug. 2008 (27.08.2008) the whole document | 1-13 |
| A | CN101222291A (ZTE CORPORATION) 16 Jul. 2008 (16.07.2008) the whole document | 1-13 |
| A | WO2008/157462A1 (MOTOROLA INC.) 24 Dec. 2008 (24.12.2008) the whole document | 1-13 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 18 Dec. 2009 (18.12.2009) | **28 Jan. 2010 (28.01.2010)** |

| Name and mailing address of the ISA/CN | Authorized officer |
|---|---|
| The State Intellectual Property Office, the P.R.China<br>6 Xitucheng Rd., Jimen Bridge, Haidian District, Beijing, China 100088<br>Facsimile No. 86-10-62019451 | YAN,Yan<br>Telephone No. (86-10)62413129 |

Form PCT/ISA /210 (second sheet) (July 2009)

## INTERNATIONAL SEARCH REPORT
Information on patent family members

| International application No. |
| --- |
| PCT/CN2009/074551 |

| Patent Documents referred in the Report | Publication Date | Patent Family | Publication Date |
| --- | --- | --- | --- |
| CN101442818A | 27.05.2009 | NONE | |
| CN101252783A | 27.08.2008 | NONE | |
| CN101222291A | 16.07.2008 | WO2009/086736A1 | 16.07.2009 |
| WO2008/157462A1 | 24.12.2008 | US2008/0311919A1 | 18.12.2008 |

Form PCT/ISA /210 (patent family annex) (July 2009)